# EUROPÄISCHE PATENTSCHRIFT

(11) **EP 3 523 747 B1**
(45) Veröffentlichungstag und Bekanntmachung des Hinweises auf die Patenterteilung: **11.11.2020**
(21) Anmeldenummer: 17772394.7
(22) Anmeldetag: 22.09.2017
(51) Int. Cl.: G06K 7/10, G07C 9/00, G07B 15/00, G07C 9/10

(54) **EINRICHTUNG ZUR KONTROLLE VON AUF DATENTRÄGERN GESPEICHERTEN ZUGANGSBERECHTIGUNGEN**
DEVICE FOR CHECKING ACCESS AUTHORISATIONS STORED ON DATA CARRIERS
DISPOSITIF POUR CONTRÔLER DES AUTORISATIONS D'ACCÈS MÉMORISÉES SUR DES SUPPORTS DE DONNÉES

(30) Priorität: 06.10.2016 AT 4632016
(43) Veröffentlichungstag der Anmeldung: 14.08.2019
(73) Patentinhaber: Axess AG, 5081 Anif (AT)
(72) Erfinder: FISCHER, Josef, Hallein 5400 (AT); WINDHAGER, Christian, 5061 Elsbethen (AT); SUTER, Oliver, 5422 Bad Dürrnberg (AT)
(74) Vertreter: Gibler & Poth Patentanwälte KG
(86) Internationale Anmeldenummer: PCT/EP2017/074026
(87) Internationale Veröffentlichungsnummer: WO 2018/065238

(56) Entgegenhaltungen:
- EP-A2- 1 605 413
- EP-A2- 2 234 032
- DE-U1- 20 114 630

## Beschreibung

Die Erfindung betrifft eine Einrichtung zur Kontrolle von auf Datenträgern gespeicherten Zugangsberechtigungen, mit einer im Zugangsbereich angeordneten Leseeinheit für den Datenträger, welche Leseeinheit ein Signalmittel und / oder ein Sperrmittel ansteuert, wobei die Leseeinheit ein Gehäuse mit einem Einführbereich für die Datenträger aufweist, und der Einführbereich eine obenliegende ersten Wandung mit einem den Einführbereich erfassenden Lesemodul aufweist.

Ticketleser sind bekannt mit einem Einführschlitz im jeweiligen Format des Datenträgers, beispielsweise bei Bankomaten im Kreditkartenformat. Nachteilig ist hier, dass der Benutzer den Einführschlitz oftmals nicht erkennt oder findet und daher die Abfertigungszeit hoch ist. Bei einem Geldausgabegerät ist das noch akzeptabel, in der Zugangskontrolle führt das aber zu Stau am Zugang.

Eine verbesserte Einrichtung ist beispielsweise in der DE20114630 beschrieben wobei vorgeschlagen wird, den Einführbereich deutlich größer als das verwendete Ticket zu gestalten. Der V-förmig ausgebildete Einführbereich verfügt hier in seiner oberen Wandung über ein Fenster durch welches ein Barcodescanner den Einführbereich abtastet. Diese Ausbildung hat den Vorteil, dass ein großformatiger Schacht für den Benutzer nach wie vor als Einführbereich für Tickets erkannt wird, jedoch keine Einschränkung für das Ticketformat auferlegt.

Tickets als Datenträger für die Zugangskontrolle sind in vielen Ausführungsformen bekannt. Insbesondere für die automatisierte Zugangskontrolle hat sich vorwiegend das Kreditkartenformat durchgesetzt. Dieses Format ist den meisten Benutzern geläufig und kann auch gut für verschiedene Tickettechnologien eingesetzt werden. Beispiele dafür sind Tickets mit Barcode, mit Magnetstreifen oder mit einlaminierten RFID-Chips. Ein grundsätzlicher Nachteil eines solchen Datenträgers ist aber, dass er leicht an Dritte weitergegeben werden kann.

Die Erfindung hat sich die Aufgabe gestellt, eine Einrichtung zur Zugangskontrolle dahingehend zu verbessern, dass die Bedienung erleichtert und damit die Abfertigungszeit kurz ist, und dass die Einrichtung für kartenförmige Datenträger und auch für personalisierte Datenträger geeignet ist.

Ausgehend von der eingangs genannten Gattung, bei dem die Leseeinheit ein Gehäuse mit einem Einführbereich für die Datenträger aufweist, und der Einführbereich eine obenliegende ersten Wandung mit einem den Einführbereich erfassenden Lesemodul aufweist, wird dies nach der Erfindung dadurch erreicht, dass eine untenliegende zweite Wandung des Einführbereiches lösbar und/oder schwenkbar am Gehäuse befestigt ist, dass die Leseeinheit durch ein Schwenken und/oder Abnehmen der untenliegenden zweiten Wandung vorgebbar von einem ersten Zustand in einen zweiten Zustand wandelbar ist, wobei in dem ersten Zustand der Leseeinheit die zweite Wandung zusammen mit der ersten Wandung einen U- oder V- förmigen Einführbereich ausbildet, und im zweiten Zustand der Einführbereich L-förmig und nach unten offenen ausgebildet ist.

Ein wesentlicher Vorteil dieser Ausgestaltung liegt darin, dass die Leseeinheit mit U- oder V- förmigem Einführbereich gut geeignet ist um Datenträger im Kreditkartenformat zu lesen, während durch Wegschwenken der untenliegenden Wandung des Einführbereiches ein L-förmiger, unten offener Einführbereich entsteht. In dieser Lage ist die Leseeinheit optimal dafür adaptiert, um Datenträger in Form von Armbändern zu lesen.

Die erfindungsgemäße Leseeinheit kann so beispielsweise im Regelbetrieb für Tickets im Kartenformat eingesetzt werden, für Veranstaltungen hingegen können Tickets in Form von Armbändern verwendet werden. Ein Armband ist insbesondere gut geeignet dauerhaft am Besitzer fixiert zu werden, womit eine unzulässige Übergabe des Tickets an Dritte verhindert wird. Aber auch beispielsweise für den Betrieb einer Schwimmveranstaltung ist ein Armband vorteilhafter.

Wenn im Gehäuse der Leseeinheit ein Annäherungssensor angeordnet ist kann eine weitere Verbesserung im Personenfluss erreicht werden. Der Abtastbereich des Annäherungssensors soll in Zugangsrichtung gesehen vor oder hinter den Einführbereich für die Datenträger ausgerichtet sein. So kann bei Freigabe sichergestellt werden, dass sich die Zutritt suchende Person in der richtigen Position befindet.

Im Gehäuse der Leseeinheit könne auch zwei Annäherungssensoren angeordnet sein, wobei der Abtastbereich des ersten Annäherungssensors in Zugangsrichtung gesehen vor den Einführbereich für die Datenträger ausgerichtet sein soll und der Abtastbereich des zweiten Annäherungssensors in Zugangsrichtung gesehen hinter den Einführbereich für die Datenträger ausgerichtet sein soll. Der Zugang ist dann für beide Richtungen geeignet.

Die Erfindung wird nun nachfolgend anhand eines Ausführungsbeispiels und unter Bezugnahme auf die Zeichnungen näher erläutert. Die Figur 1 zeigt eine Schrägansicht der Leseeinheit, die Figur 2 einen schematischen Querschnitt dieser Leseeinheit, die Figur 3 zeigt eine Schrägansicht der Leseeinheit bei Konfiguration für Armbänder als Datenträger, die Figur 4 einen schematischen Ausschnitt der Leseeinheit nach Figur 4 mit wegklappbarer, unterer Wandung des Einführbereiches, die Figur 5 den schematischen Querschnitt der Leseeinheit in Konfiguration für den Einsatz von Armbändern als Datenträger, die Figur 6 zeigt die Schrägansicht eines Zugangs mit erfindungsgemäßer Leseeinheit konfiguriert für Armbänder, die Figur 7 zeigt die Schrägansicht eines Zugangs mit erfindungsgemäßer Leseeinheit konfiguriert für Datenträger in Kartenform, die Figur 8 die schematische Schrägansicht der Leseeinheit mit zusätzlichen Annäherungssensoren und die Figur 9 die Draufsicht auf eine mit dieser Leseeinheit ausgestatteten Zugang.

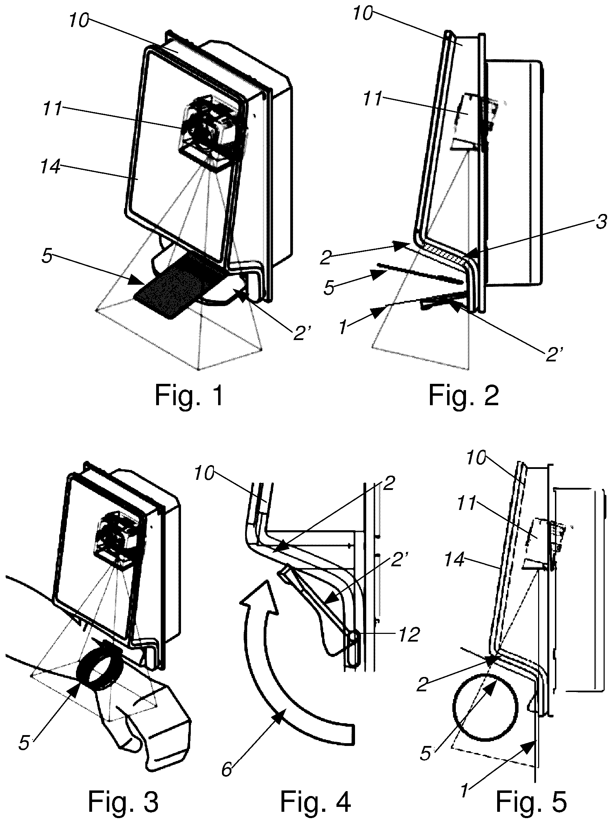

Wie in den Figuren 1 und 2 dargestellt besteht die erfindungsgemäße Leseeinheit aus einem Gehäuse 10, welches wie später noch erläutert wird in eine Zugangskontrollsperre, beispielsweise ein Drehkreuz verbaut werden kann oder auch nur mit Signalvorrichtungen im Zugangsbereich angeordnet wird. Im oberen Bereich des Gehäuses 10 ist ein Lesemodul angeordnet. Unterhalb des Lesemoduls wird ein U-förmiger Einführbereich 1 für Datenträger 5,5' von einer obenliegenden Wandung 2 und einer untenliegenden Wandung 2' gebildet.

Insbesondere kann vorgesehen sein, dass das Lesemodul ein in der obenliegenden Wandung 2 angeordnetes Fenster 3 mit einem dahinterliegenden Barcode-Scanner 11 aufweist, wobei der Barcode-Scanner 11 durch das Fenster 3 den Einführbereich 1 abtastet. Die obenliegende Wandung 2 enthält ein in Fig. 2 schraffiert dargestelltes Fenster 3, durch welches der Barcode-Scanner 11 hindurch den Einführbereich abtastet.

Geeignete Barcodescanner sind vielfach bekannt, beispielsweise der "Zebra DS457 Imager", und sie verwenden üblicherweise Kamerasysteme mit nachgeschalteter Auswertelogik, welche einen Barcode erfassen und dessen numerischen Inhalt an ein nachgeordnetes Zugangssystem ausgeben. Es sei aber ausdrücklich darauf hingewiesen, dass dieser Barcode-Scanner 11 im Rahmen der Erfindung selbstverständlich durch jede andere, geeignete Lesetechnologie ausgetauscht werden kann, beispielsweise auch durch einen RFID Leser. Dementsprechend ist die Bezeichnung Fenster 3 abstrakt zu verstehen, wesentlich ist hier dass die obenliegende Wandung 2' des Einführbereiches 1 für die jeweils gewählte Lesetechnologie durchlässig ist (z.B Infrarot, elektromagnetische Wellen des RFID Lesemoduls).

Die in der in Fig. 1 und 2 dargestellte Konfiguration der erfindungsgemäßen Leseeinheit ist optimal für kartenförmige Datenträger 5 geeignet, da dieser leicht zur Lesung der Berechtigung präsentiert werden kann und der Benutzer intuitiv versteht, den Datenträger 5 in den Einführbereich 1 einzuführen. Diese Konfiguration entspricht dem ersten Zustand der Leseeinheit.

In der Figur 4 ist dargestellt, dass die untenliegende Wandung 2' des Einführbereiches 1 mittels eines Scharniers 12 am Gehäuse 10 klappbar befestigt ist. Der Pfeil 6 symbolisiert die Schwenkbewegung der unteren Wandung 2' welche durch das Scharnier 12 ermöglicht wird. Klappt man die untenliegende Wandung 2' nach oben, so wandelt sich der vormals U-förmige Einführbereich 1 in einen L-förmigen, nach unten offenen Einführbereich 1. Die erfindungsgemäße Leseeinheit ist nun optimal dafür konfiguriert, Datenträger 5' in Form eines Armbandes zu lesen, da der Benutzer seinen Arm gut in eine zur Lesung geeignete Lage bringen kann. Die Figuren 3 und 5 zeigen diese Lage in Schrägansicht und im schematischen Querschnitt. Diese Konfiguration entspricht dem zweiten Zustand der Leseeinheit.

Es kann daher eine Einrichtung zur Kontrolle von auf Datenträgern 5,5' gespeicherten Zugangsberechtigungen vorgesehen sein, mit einer im Zugangsbereich angeordneten Leseeinheit für den Datenträger 5,5', welche Signalmittel und / oder Sperrmittel 4 ansteuert, wobei die Leseeinheit ein Gehäuse 10 mit einem U- oder V- förmigen Einführbereich 1 für die Datenträger 5,5' aufweist, und der U- oder V- förmige Einführbereich 1 teilweise von einer obenliegenden Wandung 2 gebildet wird, in welcher ein Fenster 3 mit einem dahinterliegenden Barcode-Scanner 11 angeordnet ist, welcher durch das Fenster 3 den Einführbereich 1 abtastet, wobei die zweite, untenliegende Wandung 2' des U-förmigen Einführbereiches 1 mit einem lösbaren oder schwenkbaren Scharnier 12 am Gehäuse 10 befestigt ist, sodass der U- oder V- förmigen Einführbereich 1 durch Schwenken oder Abnehmen der untenliegenden Wandung in einen L-förmigen, nach unten offenen Einführbereich 1 gewandelt werden kann.

Hier ist auch angedeutet, dass oberhalb des Einführbereiches 1 am Gehäuse 10 ein großflächiges Display 14 ausgebildet ist, sodass hier unmittelbar an der Lesezone Benutzungshinweise gegebene werden können.

Armbänder als Datenträger 5' für die Zugangskontrolle sind an sich bekannt und verwenden meist entweder Barcodes, die in das Armband eingedruckt sind, oder aber RFID Inlays. Armbänder werden insbesondere gerne bei einmaligen Veranstaltungen gerne eingesetzt, weil das Armband mit einem Einmalverschluss am Besitzer befestigt werden kann und so eine Weitergabe an unberechtigte Dritte verhindert wird. Eine andere Anwendung sind Schwimmbäder, wo das Armband eine gute Möglichkeit darstellt, den Datenträger unverlierbar an der berechtigten Person zu befestigen.

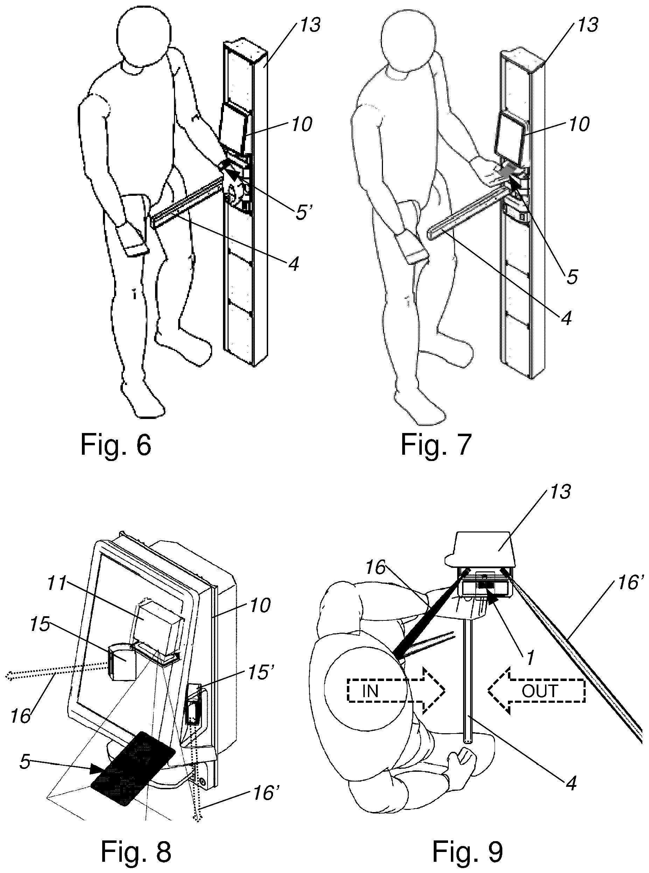

Die Figur 6 zeigt eine schematische Zugangskontrolle mit einer Säule 13, welche ein Sperrmittel 4 für den Zugang trägt. Das Sperrmittel 4, welches auch als Sperrvorrichtung oder Zugangssperre bezeichnet werden kann, ist hier ein Flap-Arm, der motorisch aus der Geschlossen-Stellung in die Offen-Stellung verfahrbar ist, wenn das Zugangssystem die gültige Berechtigung erkennt.

Die zutretende Person in Figur 6 trägt einen Datenträger 5' in Form eines Armbandes und die erfindungsgemäße Leseeinheit ist durch Hochklappen der unteren Wandung 2' des Einführbereiches mit L-förmigem Einführbereich konfiguriert, also im zweiten Zustand. Es ist hier gut erkennbar, dass die erfindungsgemäße Leseeinheit ein lesbares Zuführen des Datenträgers 5' in Armbandform ermöglicht.

In der Figur 7 ist dieselbe Zugangskontrolle dargestellt, wobei hier die erfindungsgemäße Leseeinheit mit heruntergeklappter Wandung 2' konfiguriert ist, also im ersten Zustand ist, um dem Benutzer mit einem kartenförmiger Datenträger 5 optimale Ergonomie zu bieten.

Die Erfindung stellt somit eine Leseeinheit bereit, die beliebig auf en jeweiligen Anwendungsfall angepasst werden kann. Dies ist insbesondere dort von Vorteil, wo sich die Anforderungen an den Datenträger 5,5' kurzfristig ändern können. Beispielsweise kann die Zugangskontrolle für ein Freizeit-Resort im Winter mit U-förmigem Lesebereich für Karten und im Sommer mit L-förmigem Lesebereich konfiguriert werden.

Die in Figur 8 dargestellte Leseeinheit weist zusätzlich zu dem Barcodescanner 11 noch zwei Annäherungssensoren 15 und 15' auf. Als Annäherungssensor ist beispielsweise ein Lichttaster geeignet wie er unter Sick WL 11 - Photoelectric sensors - bekannt ist. Ein solcher Lichtaster sendet einen Lichtstrahl aus der z.B. von einer im Strahl stehenden Person reflektiert wird und einen Schaltausgang steuert.

Der Abtastbereich 16 des ersten Annäherungssensors 15 in Zugangsrichtung IN gesehen vor den Einführbereich 1 für die Datenträger 5,5' ausgerichtet. Der Abtastbereich 16' des zweiten Annäherungssensors 15' in Zugangsrichtung IN gesehen hinter den Einführbereich 1 für die Datenträger 5,5' ausgerichtet.

Die Figur 9 zeigt die sich aus dieser Konfiguration ergebenden Vorteile der erfindungsgemäßen Leseeinheit in einem Personenzugang. Der in Zugangsrichtung IN gerichtete Abtaststrahl 16 des ersten Annäherungssensors 15 detektiert, dass sich die Person welche einen Datenträger 5,5' zur Lesung am Einführbereich 1 präsentiert, korrekt in Zugangsrichtung bewegt.

Würde sich diese Person auf der Ausgangsseite OUT befinden, würde der hinter den Einführbereich 1 gerichtete Abtaststrahl 16' des zweiten Annäherungssensors 15' dies erkennen und an eine hier nicht dargestellte Auswertelogik melden. Die Freigabe des Sperrmittels 4 kann dann unterbunden werden.

Dasselbe gilt auch wenn zugleich mit der eintretenden Person der Ausgang durch eine weitere Person blockiert ist. Auch dann wird dieser Umstand erkannt.

Diese erfindungsgemäße Ausbildung ermöglicht weiters, indem die Lesung eines Datenträgers 5,5' durch das Lesemodul, insbesondere der Barcodescanner 11 oder einen RFID-Leser im Falle von RFID-Datenträgern, der Bewegungsrichtung des Benützers zugeordnet wird, das Sperrmittel 4 in die entsprechende Richtung freizuschalten. Diese Freischaltung erfolgt dann durch die hier nicht dargestellte Auswertelogik, die das Lesemodul und die beiden Annäherungssensoren 15 und 15' abfragt und dementsprechend Freigabekommandos für das Sperrmittel 4 erzeugt.

## Patentansprüche

1. Einrichtung zur Kontrolle von auf Datenträgern (5,5') gespeicherten Zugangsberechtigungen, mit einer in einem Zugangsbereich angeordneten Leseeinheit für den Datenträger (5,5'), welche Leseeinheit ein Signalmittel und / oder ein Sperrmittel (4) ansteuert, wobei die Leseeinheit ein Gehäuse (10) mit einem Einführbereich (1) für die Datenträger (5,5') aufweist, und der Einführbereich (1) eine obenliegende erste Wandung (2) mit einem den Einführbereich (1) erfassenden Lesemodul aufweist, **dadurch gekennzeichnet, dass** eine untenliegende zweite Wandung (2') des Einführbereiches (1) lösbar und/oder schwenkbar am Gehäuse (10) befestigt ist, dass die Leseeinheit durch ein Schwenken und/oder Abnehmen der untenliegenden zweiten Wandung (2') vorgebbar von einem ersten Zustand in einen zweiten Zustand wandelbar ist, wobei in dem ersten Zustand der Leseeinheit die zweite Wandung (2') zusammen mit der ersten Wandung (2) einen U- oder V- förmigen Einführbereich (1) ausbildet, und im zweiten Zustand der Einführbereich (1) L-förmig und nach unten offen ausgebildet ist.

2. Einrichtung nach Anspruch 1, **dadurch gekennzeichnet, dass** das Lesemodul ein in der obenliegenden Wandung (2) angeordnetes Fenster (3) mit einem dahinterliegenden Barcode-Scanner (11) aufweist, wobei der Barcode-Scanner (11) durch das Fenster (3) den Einführbereich (1) abtastet.

3. Einrichtung nach Anspruch 1 oder 2, **dadurch gekennzeichnet, dass** das Gehäuse (10) oberhalb der obenliegende ersten Wandung (2) des Einführbereiches (1) ein großflächiges Display (14) trägt.

4. Einrichtung nach einem der Ansprüche 1 bis 3, **dadurch gekennzeichnet, dass** im Gehäuse (10) der Leseeinheit ein Annäherungssensor (15) angeordnet ist, wobei ein Abtastbereich (16) des Annäherungssensors (15) in Zugangsrichtung (IN) gesehen vor oder hinter den Einführbereich (1) für die Datenträger (5) ausgerichtet ist.

5. Einrichtung nach einem der Ansprüche 1 bis 3, **dadurch gekennzeichnet, dass** im Gehäuse (10) der Leseeinheit zwei Annäherungssensoren (15,15') angeordnet sind, wobei ein Abtastbereich (16) des ersten Annäherungssensors (15) in Zugangsrichtung (IN) gesehen vor den Einführbereich (1) für die Datenträger (5,5') ausgerichtet ist und wobei ein Abtastbereich (16') des zweiten Annäherungssensors (15') in Zugangsrichtung (IN) gesehen hinter den Einführbereich (1) für die Datenträger (5,5') ausgerichtet ist.

## Claims

1. Device for checking access authorizations stored on data carriers (5, 5'), comprising a reading unit for the data carrier (5, 5'), which reading unit is arranged in an access area and actuates a signalling means and/or a blocking means (4), wherein the reading unit has a housing (10) with an insertion area (1) for the data carriers (5, 5'), and the insertion area (1) has an upper first wall (2) with a reading module which captures the insertion area (1), **characterized in that** a lower second wall (2') of the insertion area (1) is fastened to the housing (10) in a detachable and/or pivotable manner, **in that** the reading unit can be converted from a first state to a second state in a predefinable manner by pivoting and/or removing the lower second wall (2'), wherein in the first state of the reading unit the second wall (2') together with the first wall (2) forms a U-shaped or V-shaped insertion area (1), and in the second state the insertion area (1) is L-shaped and open at the bottom.

2. Device according to claim 1, **characterized in that** the reading module has a window (3) arranged in the upper wall (2) with a barcode scanner (11) located therebehind, wherein the barcode scanner (11) scans the insertion area (1) through the window (3).

3. Device according to claim 1 or 2, **characterized in that** the housing (10) carries a large-format display (14) above the upper first wall (2) of the insertion area (1).

4. Device according to any one of claims 1 to 3, **characterized in that** a proximity sensor (15) is arranged in the housing (10) of the reading unit, wherein a sensing area (16) of the proximity sensor (15) is oriented in front of or behind the insertion area (1) for the data carriers (5) as seen in the access direction (IN).

5. Device according to any one of claims 1 to 3, **characterized in that** two proximity sensors (15, 15') are arranged in the housing (10) of the reading unit, wherein a sensing area (16) of the first proximity sensor (15) is oriented in front of the insertion area (1) for the data carriers (5, 5') as seen in the access direction (IN), and wherein a sensing area (16') of the second proximity sensor (15') is oriented behind the insertion area (1) for the data carriers (5, 5') as seen in the access direction (IN).

## Revendications

1. Dispositif pour contrôler des autorisations d'accès enregistrées sur des supports de données (5, 5'), comprenant une unité de lecture pour le support de données (5, 5'), qui est disposée dans une zone d'accès et qui commande un moyen de signalisation et/ou un moyen de blocage (4), l'unité de lecture présentant un boîtier (10) avec une zone d'insertion (1) pour les supports de données (5, 5') et la zone d'insertion (1) présentant une première paroi supérieure (2) avec un module de lecture qui détecte la zone d'insertion (1), **caractérisé en ce qu'**une deuxième paroi inférieure (2') de la zone d'insertion (1) est fixée de manière amovible et/ou pivotante au boîtier (10), que l'unité de lecture peut être mise de manière prédéfinie d'un premier état dans un deuxième état par pivotement et/ou retrait de la deuxième paroi inférieure (2'), dans lequel, dans le premier état de l'unité de lecture, la deuxième paroi (2') forme avec la première paroi (2) une zone d'insertion (1) en forme de U ou de V et, dans le deuxième état, la zone d'insertion (1) est en forme de L et ouverte vers le bas.

2. Dispositif selon la revendication 1, **caractérisé en ce que** le module de lecture présente, dans la paroi supérieure (2), une fenêtre (3) derrière laquelle est disposé un lecteur de code à barres (11), le lecteur de code à barres (11) balayant la zone d'insertion (1) à travers la fenêtre (3).

3. Dispositif selon la revendication 1 ou 2, **caractérisé en ce que** le boîtier (10) porte un affichage de grande surface (14) au-dessus de la première paroi supérieure (2) de la zone d'insertion (1).

4. Dispositif selon l'une des revendications 1 à 3, **caractérisé en ce qu'**un capteur de proximité (15) est disposé dans le boîtier (10) de l'unité de lecture, une zone de balayage (16) du capteur de proximité (15) étant orientée devant ou derrière la zone d'insertion (1) pour les supports de données (5), vu dans le sens d'accès (IN).

5. Dispositif selon l'une des revendications 1 à 3, **caractérisé en ce que** deux capteurs de proximité (15, 15') sont disposés dans le boîtier (10) de l'unité de lecture, une zone de balayage (16) du premier capteur de proximité (15) étant orientée devant la zone d'insertion (1) pour les supports de données (5, 5'), vu dans le sens d'accès (IN), et une zone de balayage (16') du deuxième capteur de proximité (15') étant orientée derrière la zone d'insertion (1) pour les supports de données (5, 5'), vu dans le sens d'accès (IN).
